# EUROPEAN PATENT APPLICATION

(11) **EP 2 579 606 A2**
(43) Date of publication of application: **10.04.2013**
(21) Application number: 12185931.8
(22) Date of filing: 25.09.2012
(51) Int. Cl.: H04N 21/422, H04N 21/41

(54) **Remote control apparatus, remote control method and display apparatus**

(30) Priority: 07.10.2011 KR 20110102242
(71) Applicant: Samsung Electronics Co., Ltd, Gyeonggi-do 443-742 (KR)
(72) Inventor: Yum, Duck-ki, Seoul (KR)
(74) Representative: Hewett, Jonathan Michael Richard

(57) **Abstract**

A remote control apparatus, a remote control method and a display apparatus are provided. The remote control apparatus includes a communicator which communicates with an electronic device in a wireless manner; a connector configured to be connected to an external input device; a signal processor which receives an input command which is transmitted by an external input device connected to the connector, and converts the input command into a wireless signal; and a controller which controls the communicator to transmit the wireless signal to the electronic device.

## Description

The present invention relates to a remote control apparatus, a remote control method and a display apparatus which is subject to remote control.

To adjust various electronic devices including a display apparatus, the display apparatus may be provided with a remote controller. As functions and types of electronic devices increase, there are more and more types of commands to be transmitted to the electronic devices and various types of remote controllers are being developed.

Related art remote controllers have used infrared (IR) signaling. However, remote controllers employing other wireless communication types such as radio frequency (RF) types including Bluetooth are of interest for their wider frequency bands and for the variety of signals that can be transmitted.

However, in the case of an RF type remote controller, a pairing process should be performed to ensure transmission of data. To that end, if control using several different types of remote controller is desired or if another remote controller is to be added, each remote controller should be paired with the electronic apparatus and an inconvenience arises.

Moreover, if the remote controller does not support standard protocols for RF communication, the electronic apparatus cannot be controlled by the remote controller.

One or more exemplary embodiments of the present invention provide a remote control apparatus, a remote control method and a display apparatus in which the remote control apparatus and the electronic apparatus are used without being paired if the electronic apparatus is controlled by the remote control apparatus by radio frequency (RF) type.

Further, one or more exemplary embodiments provide a remote control apparatus, a remote control method and a display apparatus in which the electronic apparatus is controlled by the remote control apparatus in circumstances in which an RF standard protocol is not supported.

According to an aspect of the present invention, there is provided a remote control apparatus including a communication unit which communicates with an electronic apparatus in a wireless manner; a connector which is configured to be connected to an external input device; a signal processor which receives an input command which is transmitted by an external input device connected to the connector, and converts the input command into a wireless signal; and a controller which controls the communication unit to transmit the wireless signal to the electronic apparatus.

The communication unit may communicate with the electronic apparatus using a radio frequency (RF) signal, and the controller may control the communication unit to transmit the wireless signal to the electronic apparatus which is paired.

The external input device may include a personal identification number (PIN), and the controller may receive the PIN of the connected external input device and transmit the PIN to the electronic apparatus to paired the remote control apparatus with the electronic apparatus.

The controller may control the communication unit to transmit information on a type of the connected external input device to the electronic apparatus if the external input device is connected to the connector.

The remote control apparatus may further include a key input unit which is used to receive an input command, and the key input unit may include at least one button to allow input of a type of the external input device connected to the connector.
The electronic apparatus may include a display apparatus.

The external input device may be connected to the connector by at least one of an inter-integrated circuit (I2C), a universal asynchronous receiver/transmitter (UART) and a serial peripheral interconnect (SPI).

According to another aspect of the present invention, there is provided a display apparatus including a display unit which displays an image thereon; a signal receiver which receives a wireless signal from a remote control apparatus, the wireless signal comprising an input command of an external input device that is connected to the remote control apparatus; and a controller which processes the wireless signal and performs an operation corresponding to the input command.

The wireless signal may include a radio frequency (RF) signal, and the input command may comprise a personal identification number (PIN) of the external input device.

The signal receiver may receive information from the remote control apparatus on a type of the input device connected to the remote control apparatus, and the controller may process the received wireless signal according to the information.

The controller may display a user interface (UI) displaying a notification of a type of the external input device on the display unit.

According to an aspect of another exemplary embodiment, there is provided a remote control method including connecting an external input device to a remote control apparatus; receiving an input command from the connected external input device; converting the received input command into a wireless signal; and transmitting the wireless signal to the electronic apparatus.

The wireless signal may include an RF signal, and the transmitting may comprise transmitting the input command to the electronic apparatus which is paired.

The external input device may include a personal identification number (PIN), and the method may further include receiving the PIN form the connected external input device and transmitting the PIN to the electronic apparatus to perform a pairing operation. The method may further include transmitting information on a type of the connected external input device to the electronic apparatus if the external input device is connected.

The electronic apparatus may include a display apparatus.

The connecting the input device may include connecting the external input device by at least one of I2C, UART and SPI.

The above and/or other aspects will become apparent and more readily appreciated from the following description of the exemplary embodiments, taken in conjunction with the accompanying drawings, in which:
FIG. 1 illustrates an input device, a remote control apparatus, and an electronic apparatus according to an exemplary embodiment;
FIG. 2 is a control block diagram of the remote control apparatus according to an exemplary embodiment;
FIG. 3 illustrates a pairing method of the remote control apparatus and electronic apparatus according to an exemplary embodiment;
FIG. 4 is a control block diagram of a display apparatus according to an exemplary embodiment; and
FIG. 5 is a flowchart of a remote control method according to an exemplary embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

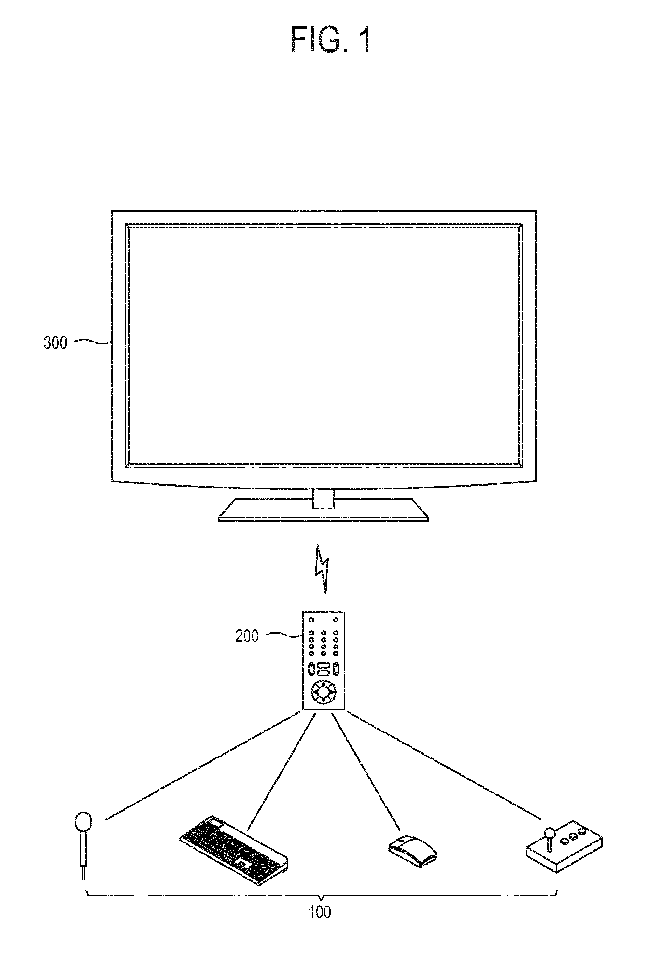

FIG. 1 illustrates an input device 100, a remote control apparatus 200, and an electronic apparatus 300 according to an exemplary embodiment.

The input device 100 outputs an input command to control the electronic apparatus 300, and may be, for example, a microphone, a keyboard, a mouse and/or a joystick. However, the input device 100 is not limited thereto. The input device 100 may receive an input command from a user and directly transmit the input command to the electronic apparatus 300. The input device 100 may be connected to the remote control apparatus 200 and transmit an input command to the electronic apparatus 300 through the remote control apparatus 200.

The remote control apparatus 200 may transmit an input command to the electronic apparatus 300, and may be, for example, a remote controller. However, the remote control apparatus 200 is not limited thereto. Alternatively, a single device may perform functions of the input device 100 according to the present exemplary embodiment, and perform functions of the remote control apparatus 200 according to the present exemplary embodiment. The remote control apparatus 200 may include a keypad to directly receive a user's input command and transmit the command to the electronic apparatus 300, and receive a user's command from the connected input device 100 and transmit the command to the electronic apparatus 300.

The electronic apparatus 300 receives an input command from the remote control apparatus 200 or the input device 100, and performs an operation corresponding to the input command. The electronic apparatus 300 may include a driver or an application program corresponding to each of the remote control apparatus 200 and input device 100, and process input signals in various formats and perform operations. If a user desires to control the electronic apparatus 300 through a new input device 100, the user may install a driver or application program corresponding to the new input device 100 in the electronic apparatus 300 to thereby control the electronic apparatus 300 through the new input device 100. The electronic apparatus 300 may vary including a display apparatus such as a TV or monitor.

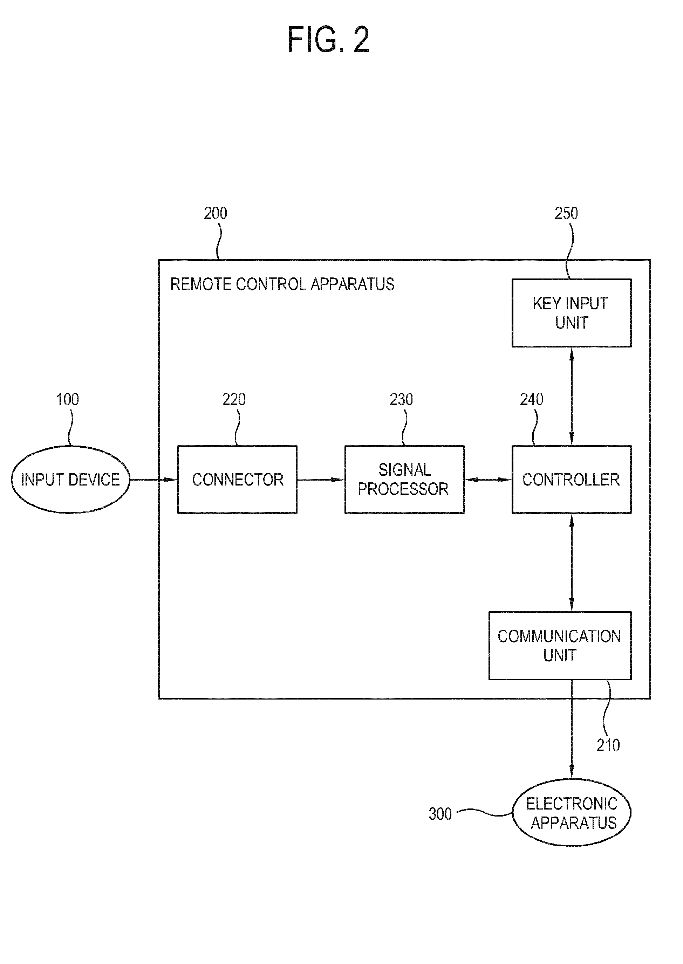

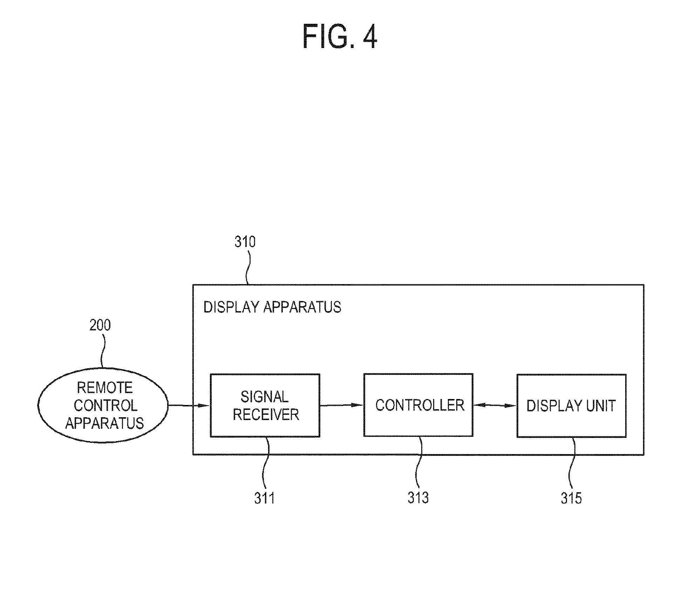

Detailed configurations and operations of the input device 100, remote control apparatus 200 and electronic apparatus 300 which are shown in FIG. 1 will be described with reference to FIGS. 2 and 4.

FIG. 2 is a control block diagram of the remote control apparatus 200 according to an exemplary embodiment.

As shown therein, the remote control apparatus 200 according to the present exemplary embodiment includes a communication unit 210, a connector 220, a signal processor 230 and a controller 240.

The communication unit 210 transmits and receives data to/from an external electronic apparatus 300 in a wireless manner. The data which are transmitted by the communication unit 210 include an input command which is input through a key input unit of the remote control apparatus 200 or an input command which is transmitted from the input device 100 which is connected to the remote control apparatus 200 through the connector 220 (to be described later). The electronic apparatus 300 which receives the input command from the remote control apparatus 200 may include various devices as well as a display apparatus.

The communication unit 210 may transmit and receive data to/from the electronic apparatus 300 that is paired with the remote control apparatus 200 through a radio frequency (RF) signal. Unlike the infrared (IR) type, the RF type enables two-way wireless communication. Since the RF communication provides a wide frequency band for communication, the remote control apparatus 200 and a display apparatus may transmit and receive various signal therebetween. Data which are transmitted by the remote control apparatus 200 may include various data in addition to input commands. If a signal is transmitted and received by RF communication, cross-authentication between both apparatuses may be performed through a pairing process. The communication unit 210 may perform RF communication with the paired electronic apparatus 300.

The connector 220 is connected to an external input device 100. The connector 220 includes a port to be connected to the input device 100. The input device 100 may be connected to the connector 220 and transmit an input command to the remote control apparatus 200 through the connector 220. The input device 100 may be connected to the connector 220 through at least one of an inter-integrated circuit (I2C), an universal asynchronous receiver/transmitter (UART), a serial peripheral interconnect (SPI), etc. The signal processor 230 converts an input command, which has been transmitted by the input device 100 connected to the connector 220, into a wireless signal which may be transmitted by the electronic apparatus 300. The input device 100 which may be connected to the remote control apparatus 200 may vary, and may include a microphone, a keyboard, a mouse and a joystick, and accordingly, an input command of the input device 100 may be transmitted in various formats of signals. The signal processor 230 converts an input command of the input device 100 into a wireless signal corresponding to a format of the electronic apparatus 300, and transmits the wireless signal to the communication unit 210 to be transmitted to the electronic apparatus 300. The controller 240 may include a microcomputer which performs an overall control operation of the remote control apparatus 200 according to the present exemplary embodiment. The controller 240 transmits the input command, which has been converted into a wireless signal by the signal processor 230, to the electronic apparatus 300 through the communication unit 210.

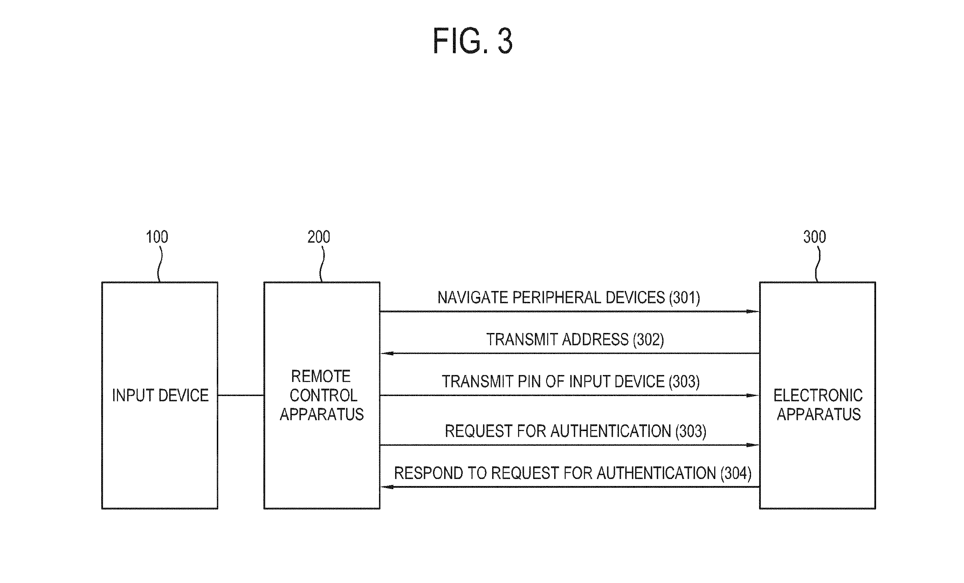

Turning to FIG. 3, if the remote control apparatus 200 transmits and receives data to/from the electronic apparatus 300 by an RF method, the controller 240 controls the remote control apparatus 200 to be paired with the electronic apparatus 300. The pairing between the remote control apparatus 200 and electronic apparatus 300 is performed shown in FIG. 3. The remote control apparatus 200 navigates peripheral devices (301) and the navigated electronic apparatus 300 transmits its address (302), the remote control apparatus 200 transmits a personal identification number (PIN) of the input device (303) and a request for authentication (304). Upon receiving the request, the electronic apparatus 300 responds to the request (305).

The remote control apparatus 200 according to the present exemplary embodiment may be connected to the input device 100 while being paired with the electronic apparatus 300. Since the input device 100 is connected to the remote control apparatus 200 in a wired manner, an input command which is received by the input device 100 may be transmitted to the electronic apparatus 300 through the remote control apparatus 200 without pairing the input device 100 and the remote control apparatus 200. Even if the input device 100 does not support an RF communication protocol, the signal processor 230 of the remote control apparatus 200 may convert the input command, which has been received from the input device 100, into a concerned format and transmit the command to the electronic apparatus 300.

Unlike what has been described above, the remote control apparatus 200 according to the present exemplary embodiment may be paired with the electronic apparatus 300 after the input device 100 is connected to the remote control apparatus 200. Since the input device 100 which is connected to the remote control apparatus 200 varies, the remote control apparatus 200 may transmit a PIN set for the input device 100, instead of a PIN of the remote control apparatus 200, to the electronic apparatus 300 and request for response to thereby be paired with the electronic apparatus 300.
If the input device 100 is connected to the remote control apparatus 200 through the connector 220, the controller 240 may transmit information on the type of the connected input device 100 to the electronic apparatus 300. Since the electronic apparatus 300 may receive an input command from the remote control apparatus 200 and the input device 100, which are different, and operate according to the input command, the electronic apparatus 300 includes a driver or an application program to drive the input command of the remote control apparatus 200 or the input device 100. For example, if a microphone as the input device 100 transmits an audio signal as an input command through the remote control apparatus 200, the electronic apparatus 300 includes a driver or an application program to analyze the audio signal and perform a corresponding operation. Since the controller 240 of the remote control apparatus 200 transmits information which notifies that the connected input device 100 is a microphone, the electronic apparatus 300 may process the audio signal of the microphone, select the driver, and perform a signal processing operation to thereby perform an operation according to the user's input command more accurately.

The remote control apparatus 200 may further include a key input unit 250 to receive an input command, and the key input unit 250 may include a button to input a type of the input device 100 which is connected to the connector 220. The key input unit 250 may include a plurality of buttons corresponding to an input command of the remote control apparatus 200, and may notify the electronic apparatus 300 of the type of the connected input device 100 according to a selection through the key input unit 250.
If a user desires to control the electronic apparatus 300 through a new input device 100 such as a microphone, a driver or an application program corresponding to the new input device 100 may be installed in the electronic apparatus 300 to thereby control the electronic apparatus 300 through the new input device 100.

FIG. 4 is a control block diagram of a display apparatus according to an exemplary embodiment.

As shown therein, the display apparatus 310 according to the present exemplary embodiment includes a signal receiver 311, a controller 313 and a display unit 315. The display apparatus 310 may perform an operation corresponding to an input command which is transmitted by the remote control apparatus 200, and the display apparatus 310 may be, for example, a TV or a monitor, but the display apparatus 310 is not limited thereto.

The display unit 315 displays an image thereon. The display apparatus 315 receives an image signal from an external image supply source, processes the image signal corresponding to various image formats and displays an image on the display unit 315. The display unit 315 may include a display panel (not shown) to display an image thereon and a panel driver (not shown) to be driven to display an image on the display unit, but not limited thereto.

The signal receiver 311 receives a wireless signal including an input command from an external remote control apparatus 200. The signal receiver 311 includes a communication module to receive a wireless signal from the remote control apparatus 200. The input command which is received by the signal receiver 311 may have been input through a key input unit of the remote control apparatus 200, or may have been transmitted through the communication unit 210 of the remote control apparatus 200 after being input through the input device 100 connected to the remote control apparatus 200.

The wireless signal which is received by the signal receiver 311 includes an RF signal, which may be received from the remote control apparatus 200 paired with the display apparatus 310. If a signal is transmitted or received through RF communication, cross-authentication between both devices should be performed through a pairing operation. If the display apparatus 310 is paired with the remote control apparatus 200, the display apparatus 310 may receive an input command of the input device 100 through the remote control apparatus 200 without additional pairing with the input device 100. The controller 313 performs an overall control operation of the display apparatus 310 according to the present exemplary embodiment. The controller 313 may include a control program, a non-volatile memory such as a read only memory (ROM) and a flash memory storing therein a control program; a volatile memory such as a random access memory (RAM) to load at least a part of the stored control program; and a microprocessor such as a central processing unit (CPU) and/or a micro control unit (MCU) to execute a loaded control program. The controller 313 may include a driver or an application program corresponding to the input device 100 to process an input command of a particular input device 100 and operate the display apparatus 310 according to the input command.

The controller 313 controls processing of a wireless signal received by the signal receiver 311 and performance of an operation corresponding to an input command included in the wireless signal. The controller 313 executes a driver or an application program corresponding to the input device 100 and processes the input command in different formats depending on the type of the input device 100.

The wireless signal which is received by the signal receiver 311 may include information on the input device 100 connected to the remote control apparatus 200, and the controller 313 may execute a particular driver or application program corresponding to the input device 100 according to the received information. In this case, the controller 313 may display on the display unit 315 a user interface (UI) displaying a notification of the type of the input device 100 according to the received information, and inform a user that which input device 100 is controlling the display apparatus 310.

If a user desires to control the electronic apparatus 300 through a new input device 100, a driver or an application program corresponding to the new input device 100 may be installed in the electronic apparatus 300 to thereby control the electronic apparatus 300 through the new input device 100.

During pairing with the remote control apparatus 200, the display apparatus 310 according to the present exemplary embodiment may receive an input command from the input device 100 without being paired with the input device 100 connected to the remote control apparatus 200, or the remote control apparatus 200 may be paired with the remote control apparatus 200 while the input device 100 is connected to the remote control apparatus 200. During pairing the display apparatus 310 receives a PIN of the input device 100 and transmits a response. This has been described above with reference to FIG. 3.

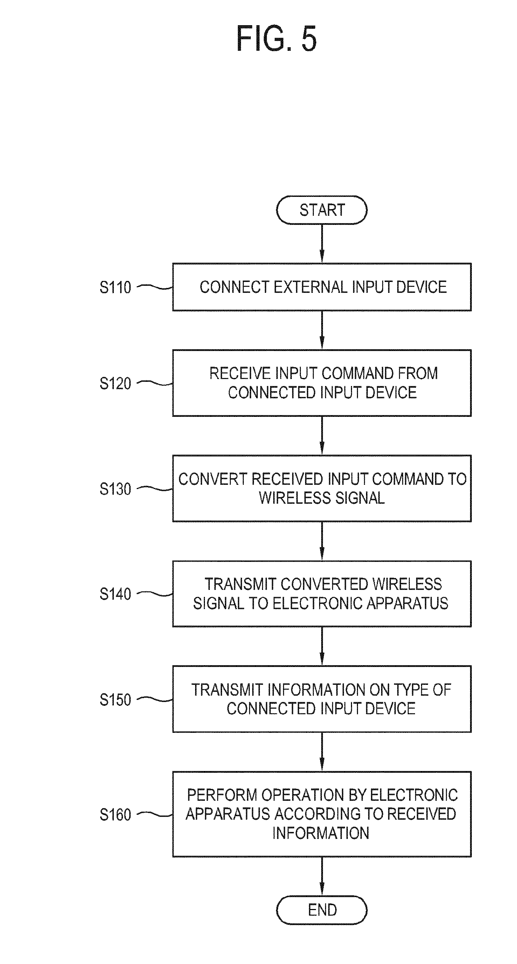

FIG. 5 is a control flowchart of a remote control method according to an exemplary embodiment.

The remote control method according to the present exemplary embodiment may include an operation of transmitting an input command to the electronic apparatus 300 by connecting the input device 100 to the remote control apparatus 200. The electronic apparatus 300 may include a display apparatus such as a TV or a monitor.

An external input device 100 is connected to the remote control apparatus 200 (S110). The input device 100 may be connected by at least one of I2C, UART and SPI. The remote control apparatus 200 may receive an input command from the connected input device 100 (S120). The remote control apparatus 200 converts the received input command into a wireless signal (S130), and transmits the converted wireless signal to the electronic apparatus 300 (S140). The input device 100 which may be connected to the remote control apparatus 200 may vary, and may include, for example, a microphone, a keyboard, a mouse and/or a joystick, and accordingly, the input command of the input device 100 may be transmitted as various formats of signals. The remote control apparatus 200 converts the input command of the input device 100 into a wireless signal corresponding to the format of the electronic apparatus 300.

The converted wireless signal includes an RF signal, and the input command may be transmitted to the paired electronic apparatus 300. Unlike in IR communication, the RF communication method enables two-way wireless communication. As RF communication provides a wide frequency band for communication, the remote control apparatus 200 and the electronic apparatus 300 may transmit and receive various signals and/or data therebetween. If a signal is transmitted and received by RF communication, both devices are paired with each other, and the remote control apparatus 200 transmits an input command only to the paired electronic apparatus 300.

The remote control apparatus 200 according to the present exemplary embodiment may be connected to the input device 100 while being paired to the electronic apparatus 300. Since the input device 100 is connected to the remote control apparatus 200 in a wired manner, the input command which is received by the input device 100 may be transmitted to the electronic apparatus 300 through the remote control apparatus 200 without first performing a pairing operation between the input device 100 and the remote control apparatus 200. Even if the input device 100 does not support the RF communication protocol, the received input command may be converted into the proper format and transmitted to the electronic apparatus 300.

Unlike what has been described above, the remote control apparatus 200 according to the present exemplary embodiment may be paired with the electronic apparatus 300 after the input device 100 is connected to the remote control apparatus 200. Since the input device 100 which is connected to the remote control apparatus 200 varies, the remote control apparatus 200 may transmit a PIN that is set for the input device 100, instead of a PIN of the remote control apparatus 200, to the electronic apparatus 300 and request a response from the electronic apparatus 300 to thereby be paired with the electronic apparatus 300.

The remote control apparatus 200 may transmit to the electronic apparatus 300 the information on the type of the connected input device 100 together with the input command (S150). The electronic apparatus 300 may perform an operation according to the received information (S160). For example, the electronic apparatus 300 may execute the driver or application program corresponding to the input device 100, process the input command and perform a corresponding operation by using the information on the type of the input device.

As described above, according to exemplary embodiments, if the electronic apparatus is controlled through the remote control apparatus by RF communication, the remote control apparatus and the electronic apparatus may be used without being paired. Further, the electronic apparatus may be controlled through the input device which does not support an RF standard protocol.

Although a few exemplary embodiments have been shown and described, it will be appreciated by those skilled in the art that changes may be made in these exemplary embodiments without departing from the invention, the scope of which is defined in the appended claims.

## Claims

1. A remote control apparatus comprising:
a communication unit which communicates with an electronic apparatus in a wireless manner;
a connector which is configured to be connected to an external input device;
a signal processor which receives an input command which is transmitted by an external input device connected to the connector, and converts the input command into a wireless signal; and
a controller which controls the communication unit to transmit the wireless signal to the electronic apparatus.

2. The remote control apparatus according to claim 1, wherein the communication unit communicates with the electronic apparatus using a radio frequency signal, and the controller controls the communication unit to transmit the wireless signal to the electronic apparatus which is paired.

3. The remote control apparatus according to claim 2, wherein the external input device comprises an identification number, and the controller receives the identification number of the connected external input device and transmits the identification number to the electronic apparatus to pair the remote control apparatus with the electronic apparatus.

4. The remote control apparatus according to claim 2, wherein the controller controls the communication unit to transmit information on a type of the connected external input device to the electronic apparatus if the external input device is connected to the connector.

5. The remote control apparatus according to claim 4, further comprising a key input unit which is used to receive an input command, wherein
the key input unit comprises at least one button configured to allow input of a type of the external input device connected to the connector.

6. The remote control apparatus according to any one of the preceding claims, wherein the electronic apparatus comprises a display apparatus.

7. The remote control apparatus according to any one of the preceding claims, wherein the external input device is connected to the connector by at least one of an inter-integrated circuit, a universal asynchronous receiver/transmitter and a serial peripheral interconnect.

8. A remote control method comprising:
connecting an external input device to a remote control apparatus;
receiving an input command from the connected external input device;
converting the received input command into a wireless signal; and
transmitting the wireless signal to an electronic apparatus.

9. The method according to claim 8, wherein the wireless signal comprises a radio frequency signal, and the transmitting comprises transmitting the input command to the electronic apparatus which is paired.

10. The method according to claim 9, wherein the external input device comprises an identification number, and the method further comprises:
receiving the identification number from the connected external input device;
and
transmitting the identification number to the electronic apparatus to perform a pairing operation.

11. The method according to claim 9, further comprising transmitting information on a type of the connected external input device to the electronic apparatus if the external input device is connected.

12. The method according to claim 11, wherein the electronic apparatus comprises a display apparatus.

13. The method according to claim 8, wherein connecting the external input device comprises connecting the input device by at least one of an inter-integrated circuit, a universal asynchronous receiver/transmitter and a serial peripheral interconnect.
